# EUROPÄISCHE PATENTANMELDUNG

(11) **EP 0 680 813 A1**
(43) Veröffentlichungstag der Anmeldung: **08.11.1995**
(21) Anmeldenummer: 94810245.4
(22) Anmeldetag: 02.05.1994
(51) Int. Cl.: B29B 15/10, B29B 9/14, B05D 1/24, B29K 63/00, B29K 79/00, B29K 105/08

(54) **Verfahren zur Herstellung von faserverstärkten Formmassen**

(71) Anmelder: CIBA-GEIGY AG, CH-4002 Basel (CH)
(72) Erfinder: Stäheli, Theodor, CH-4153 Reinach (CH)

(57) **Zusammenfassung**

Bei einem Verfahren zur Herstellung von faserverstärkten Formmassen werden die Fasern (5) mit einem Kunststoff beschichtet und anschliessend zu der entsprechenden Formmasse verarbeitet. Die Beschichtung der Fasern (5) erfolgt derart, dass die Fasern durch ein Wirbelbett (3) aus Kunststoffgranulat bzw. Kunststoffpulver bewegt werden, wodurch Kunststoffgranulat bzw. Kunststoffpulver in trockenem Zustand auf die Fasern (5) aufgebracht wird. Anschliessend werden die Fasern (5) mitsamt dem aufgebrachten Kunststoffgranulat bzw. Kunststoffpulver erwärmt, so dass der Kunststoff verflüssigt bzw. pasteus wird. Anschliessend werden die Fasern (5) mitsamt dem Kunststoff wieder abgekühlt und daraus die Formmasse erstellt.

## Beschreibung

Die Erfindung betrifft ein Verfahren zur Herstellung von faserverstärkten Formmassen gemäss dem Oberbegriff des unabhängigen Patentanspruchs.

Verfahren zur Herstellung von faserverstärkten Formmassen, bei denen die Fasern mit einem Kunststoff beschichtet werden und anschliessend zu der entsprechenden Formmasse verarbeitet werden, sind bekannt. Ein solches bekanntes Verfahren ist die Schmelzenbeschichtung, welches insbesondere zur Herstellung von langfaserverstärkten Thermoplasten angewendet wird. Bei diesem Verfahren werden die zu beschichtenden Fasern in Form eines Faserstrangs oder Fasergeflechts (Roving) bereitgestellt. Die Rovings werden dann durch eine thermo- oder duroplastische Kunststoffe umfassende Schmelze geführt. Dazu werden die Polymere auf eine hohe Schmelzentemperatur erwärmt. Die Rovings werden beim Führen durch die Schmelze von aussen beschichtet, sodass die Schmelze im Kontakt mit den äusseren Schichten des Rovings zu früh erstarrt. Damit ist die Benetzung der Einzelfasern im Innern des Rovings unzureichend, sodass die mechanischen Eigenschaften infolge unbenetzter Fasern eine hohe Streubreite aufweisen und bei der Herstellung von Formteilen zu Störungen bei der Verarbeitung oder zu unregelmässiger Oberfläche des Formteils führen können. Die zum Erreichen der niedrigen Viskosität der Kunststoffe erforderliche hohe Temperatur der Schmelze führt bei reaktiven Polymeren ausserdem zu einer unkontrollierten exothermen Reaktion und zur Vernetzung, sodass dieser Prozess für reaktive Kunststoffe nicht oder nur äusserst schwer beherrschbar ist.

Bei einem anderen bekannten Verfahren werden die Fasern ebenfalls in Form eines Faserstrangs bzw. Fasergeflechts (Roving) auf einem Rovinggestell bereitgestellt und von diesem abgewickelt. Die vom Rovinggestell abgewickelten Fasern werden ähnlich wie beim oben beschriebenen Verfahren durch ein flüssiges Imprägnierbad gezogen. Das Imprägnierbad enthält den Kunststoff, mit dem die Fasern beschichtet werden, gegebenenfalls noch Pigmente oder sonstige Zusatzstoffe und vor allem auch Lösungsmittel. Nachdem die Fasern durch dieses Imprägnierbad gezogen worden sind, muss das Lösungsmittel aus der Beschichtung entfernt werden. Zu diesem Zweck werden die beschichteten Fasern durch eine Art Turm zuerst aufwärts und dann wieder abwärts geführt, wobei sie in verschiedenen Temperaturzonen des Turms nacheinander erwärmt und dann wieder abgekühlt werden. Die Aufwärts- und Abwärtsführung erfolgt deshalb, damit ders in den Erwärmungszonen sich verflüssigende Kunststoff nicht abtropfen kann. Am Ende dieser Durchlaufstrecke durch den Turm müssen die Fasern sich in einigermassen abgekühltem Zustand befinden, damit der Kunststoff auf den Fasern nicht flüssig ist und die Fasern und geschnitten bzw. granuliert werden können. Anschliessend wird das Granulat ausgekühlt. Dieses Granulat kann dann der weiteren Verarbeitung zugeführt werden, zum Beispiel kann es heissgepresst werden.

Ein Nachteil dieses an sich funktionsfähigen Verfahrens ist, dass der Platzbedarf insbesondere durch den Turm, durch den die beschichteten Fasern zwecks Entfernung des Lösungsmittels hindurchgeführt werden müssen, doch einen recht hohen Platzbedarf zur Folge hat. Ausserdem ist es von Nachteil, dass beim Arbeiten mit Lösungsmittel zum Teil Explosions- oder Feuergefahr besteht und daher erhöhte Sicherheitsvorkehrungen getroffen werden müssen. Teilweise müssen Lösungsmittel mit hohem Siedepunkt verwendet werden. Die vollständige Abdampfung dieser Lösungsmittel kann allerdings problematisch und vor allem auch unwirtschaftlich sein. Lösungsmittel müssen nämlich entweder an die Umwelt abgegeben oder mit grossem Aufwand zurückgewonnen werden. Ausserdem wird das Reaktionsverhalten bei reaktiven Harzgemischen als Kunststoff durch den Einsatz von Lösungsmitteln ungünstig beeinflusst. Ein weiterer Nachteil ist, dass aufgrund der langen Verweilzeit des Rovings bzw. aufgrund seiner vergleichsweise geringen Durchlaufgeschwindigkeit durch die entsprechende Anlage die Produktivität solcher Verfahren relativ gering ist. Darüberhinaus ist der Energieverbrauch solcher Verfahren auch relativ gross. Ein weiterer Nachteil bei der Herstellung unter Einsatz von Lösungsmitteln ist, dass einige der dabei üblicherweise eingesetzten Lösungsmittel auch kanzerogene Wirkungen haben können und deshalb weitere Sicherheitsvorkehrungen erforderlich werden.

Es ist daher eine Aufgabe der Erfindung, ein Verfahren vorzuschlagen, bei dem einerseits der Platzbedarf deutlich reduziert wird und bei dem andererseits die vorstehend genannten Nachteile, inbesondere auch die durch den Einsatz von Lösungsmitteln hervorgerufenen, möglichst vermieden werden.

Diese Aufgabe wird erfindungsgemäss dadurch gelöst, dass die Fasern durch ein Wirbelbett aus Kunststoffgranulat bzw. Kunststoffpulver bewegt werden, wodurch Kunststoffgranulat bzw. Kunststoffpulver in trockenem Zustand auf die Fasern aufgebracht wird. Anschliessend werden die Fasern mitsamt dem aufgebrachten Kunststoffgranulat bzw. Kunststoffpulver erwärmt, so dass der feste Kunststoff verflüssigt wird. Daran anschliessend werden die Fasern mitsamt dem aufgebrachten Kunststoff wieder abgekühlt und daraus die Formmasse erstellt. Dadurch kann auf den Einsatz von Lösungsmitteln im Imprägnierbad verzichtet werden, wodurch die vom Lösungsmittel herrührenden kanzerogenen Wirkungen nicht mehr auftreten können, da das Beschichten der Fasern ohne Lösungsmittel erfolgt. Auch die erhöhte Explosions- oder Feuergefahr, die mit dem Einsatz von Lösungsmitteln einhergeht, wird auf diese Weise vermieden. Sämtliche eingangs erwähnten Nachteile, die vom Einsatz von Lösungsmitteln herrühren, werden auf diese Weise vermieden. Die aufwendigen Einrichtungen (Turm) zum Entfernen der Lösungsmittel nach dem Beschichten sind ausserdem völlig obsolet, was den Aufwand zur Herstellung der Formmassen erheblich reduziert und die Produktivität nachhaltig erhöht.

In einer vorteilhaften Verfahrensvariante wird nach der Verflüssigung des Kunststoffs weiteres Kunststoffgranulat bzw. Kunststoffpulver aufgebracht und anschliessend werden die Fasern mitsamt dem aufgebrachten Kunststoff konditioniert (erwärmt) und danach wieder abgekühlt. Dadurch kann die gewünschte Menge an Kunststoff, die auf die Faser aufgebracht werden soll, noch genau ergänzt werden. Aus den so behandelten Fasern wird dann die Formmasse erstellt. Die Konditionierung bewirkt eine Vorgelierung des Kunststoffs, allerdings keine endgültige Aushärtung, da die Fasern mit dem aufgebrachten Kunststoff ja noch verarbeitbar sein müssen. Damit der Kunststoff bei der weiteren Verarbeitung nicht flüssig ist, wird nach der Konditionierung der Kunststoff wieder abgekühlt.

In einer weiteren Verfahrensvariante werden nach dem Abkühlen die Fasern mitsamt dem aufgebrachten Kunststoff erneut erwärmt. Diese weitere Erwärmung dient dazu, eventuelle Spannungen in dem Faser/Kunststoff-Verbund abzubauen und die Sprödigkeit zu nehmen. Ausserdem dient diese weitere Erwärmung des Rovings bis zur Erweichungstemperatur dazu, ein interlaminares Zerfasern des Strangs (Roving) bei einer anschliessenden Granulierung mittels rotierender Messer zu vermeiden. Ebenso wird durch diese Vorwärmung der Messerverschleiss erheblich reduziert.

Vorteilhalterweise wird als Kunststoffgranulat bzw. Kunststoffpulver, ein Reaktivharzgemisch, insbesondere ein Polyimid- oder Epoxidharzgemisch, oder ein thermoplastisches Polymer, verwendet. Durch die Konditionierung bzw. Erwärmung und anschliessend Abkühlung sind die beschichteten Fasern sehr gut verarbeitbar. Die Erwärmung bei der Konditionierung darf bei Reaktivharzgemischen allerdings nur bis unterhalb der Temperatur (On-Set-Temperatur) erfolgen, bei der der stark exotherme Aushärtvorgang dieser Harzgemische einsetzt.

Zwecks einer einfachen Weiterverarbeitung werden die beschichteten, gegebenenfalls konditionierten, und wiederabgekühlten Fasern am Ende granuliert und als Granulat für die weitere Verarbeitung bereitgestellt.

Im folgenden wird die Erfindung anhand der Zeichnung näher erläutert Die einzige Zeichnungsfigur zeigt schematisch eine Variante des erfindungsgemässen Verfahrens.

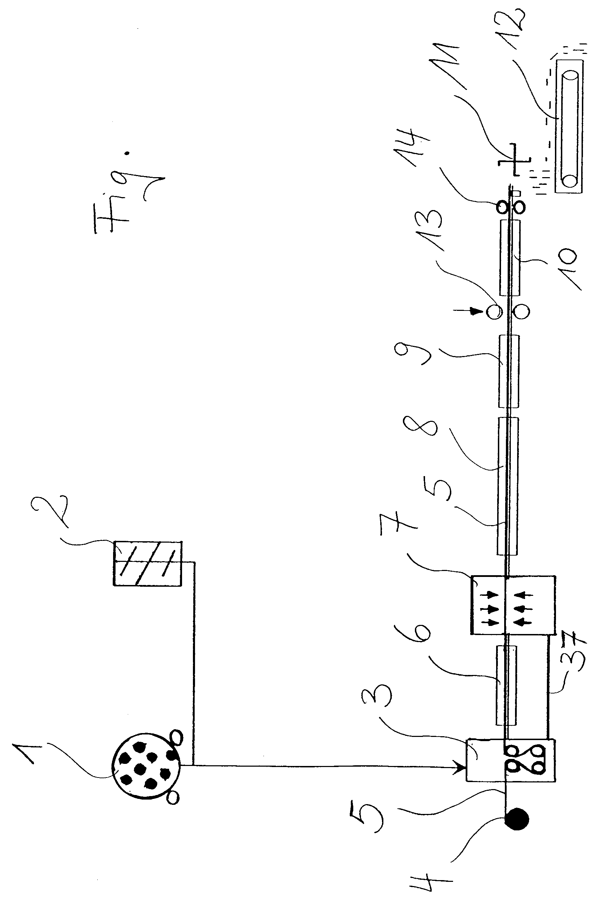

In Fig. 1 ist eine Kugelmühle 1 zu erkennen, ferner ein Mischer 2, ein Wirbelsinterbad 3 mit Umlenkrollen 30, ein Rovinggestell 4, eine oder mehrere von diesem Gestell abgewickelte Fasern 5, ein IR(InfraRot)-Erhitzer 6, eine Beschichtungseinrichtung 7, eine Konditionierstrecke 8, eine Kühleinrichtung 9, eine Erwärmungseinrichtung 10, ein Granulator 11, ein Transportband 12 für die vom Granulator 11 erzeugten Granulate, sowie zwei Walzenpaare 13 und 14.

Aus der Kugelmühle 1 wird ein pulverförmiges oder granulatförmiges Kunststoffgemisch, beispielsweise ein Expoxidharzgemisch, welches einen Härter und gegebenenfalls noch Trennmittel und/oder Pigmente umfasst, dem Wirbelsinterbad 3 zugeführt. Weitere Bestandteile können aus dem Mischer 2 ebenfalls dem Wirbelsinterbad 3 zugeführt werden. Ein Wirbelsinterbad umfasst typischerweise eine Wanne mit einem Zwischenboden, der perforiert ist, wobei der Durchmesser der Perforationen kleiner ist als die Korngrösse des Pulvers oder Granulats. Durch die Perforationen wird von unten her Luft oder ein Inertgas eingeblasen, so dass ein wallendes Pulver- bzw. Granulatbad entsteht.

Zur Beschichtung von Fasern können diese in Form eines Faserstrangs bzw. Fasergeflechts (sogenannter Roving) von einem Rovinggestell 4 abgewickelt werden. Es können auch Gewebe zur Herstellung von sogenannten "Prepregs" (Verbundwerkstoffe) beschichtet werden. Die Rovings können auch von innen beginnend von dem Rovinggestell abgewickelt werden. Auf diese Weise entsteht ein Drall, der dazu führt, dass der beschichtete Strang später einen runden Querschnitt aufweist. Die einzelnen Fasern 5 des Rovings werden nach dem Abwickeln auseinandergespreizt, bevor sie zur Beschichtung durch das Wirbelsinterbad 3 geführt werden. Die Führung durch dieses Bad erfolgt mit Hilfe von Umlenkrollen 30, die auch die Faser 5 gespannt halten.

Nachdem die Fasern 5 wieder aus dem Wirbelsinterbad 3 herausgeführt worden sind, werden sie zusammen mit dem an ihnen anhaftenden Kunststoffpulver bzw. Kunststoffgranulat, z.B. einem Epoxidharzgemisch, erwärmt. Dies kann mittels eines IR-Erhitzers 6 erfolgen. Das Epoxidharz beginnt dabei ganz leicht flüssig bzw. pastös zu werden, aber nicht so flüssig, dass es von den Fasern 5 abtropfen kann. In diesem Zustand wird in einer Beschichtungseinrichtung 7 weiteres Epoxidharzpulver bzw. -granulat zugeführt, was mittels Pulverbeschichtung erfolgen kann. Auf diese Weise kann die gewünschte Menge Kunststoff, die auf die Fasern 5 aufgebracht werden soll, noch ergänzt werden. Die Beschichtungseinrichtung 7 und das Wirbelsinterbad 3 können dabei druckmässig miteinander verbunden sein, wie durch die Verbindung 37 angedeutet, da beide vorzugsweise unter leichtem Unterdruck arbeiten, um eine weitestgehende Staubfreiheit zu ermöglichen.

Anschliessend durchlaufen die so beschichteten Fasern 5 eine Konditionierstrecke 8, in welcher sie mitsamt dem an ihr anhaftenden Kunststoff erneut erwärmt wird und das Epoxidharzgemisch vorgeliert, jedoch noch nicht ausgehärtet wird. Die beschichteten und gespreizten Fasern 5 werden hier wieder zusammengeführt und in einer anschliessenden Kühleinrichtung 9 abgekühlt. Die Kühlung ist vor allem auch deshalb notwendig, weil der Faser/Kunstsoff-Verbund anschliessend durch das Walzenpaar 13 gezogen werden, welches diesen Verbund transportiert. Am Ort des Walzenpaars 13 muss der Faser/Kunststoff-Verbund einen festen Zustand aufweisen, da sonst der Kunststoff am Walzenpaar 13 anhalten kann, wodurch diese verschmutzt würden und unter Umständen ein zuverlässiger Transport des Faser/Kunststoff-Verbunds behindert würde.

Im Anschluss an das Transportwalzenpaar 13 durchläuft der Faser/Kunststoffverbund eine Erwärmungseinrichtung 10, wodurch welcher eventuelle Spannungen in dem Verbund abgebaut werden. Anschliessend wird der Verbund durch ein weiteres Walzenpaar 14 geführt und mittels des Granulators 11 granuliert oder ohne Durchlaufen eines weiteren Walzenpaares direkt granuliert. Das erzeugte Granulat wird beispielsweise mittels eines Transportbands 12 abgeführt und dieses Granulat wird zur weiteren Verarbeitung bereitgestellt.

Das Verfahren eignet sich insbesondere zur Herstellung von Formmassen oder Prepregs (Verbundwerkstoffe), die als Fasern im Faser/Kunststoffverbund Glasfasern, Aramid-Fasern oder Kohlenstoffasern enthalten. Als Kunststoff können insbesondere Polyimid-, Epoxidharzgemische (Epoxidharz Bisphenol A) oder thermoplastische Polymere verwendet werden (Handelsnamen: KINEL® für Polyimid-Verbundwerkstoff, NEONIT® für Epoxidharz-Verbundwerkstoff). Als Härter kommen beispielsweise Anhydride oder aromatische Amine in Frage. Gegebenenfalls können noch Trennmitteln wie z.B. Zinksterat und Pigmente wie z.B. Russpigmente sowie mineralische Füllstoffe und/oder Glasperlen zugesetzt werden. Die Fasern mit dem an ihnen anhaftenden Kunststoffpulver bzw. -granulat wird im IR-Erhitzer 6 auf eine Temperatur im Bereich von etwa 70°C bis etwa 300°C erwärmt, sodass eine Vorgelierung stattfindet, jedoch die exotherme Härtungsreaktion noch nicht einsetzt. Nach der weiteren Zufuhr von Kunststoffpulver bzw. - granulat in der Beschichtungseinrichtung 7 werden die Fasern mitsamt dem Kunststoff in der Konditionierstrecke 8 erneut erwärmt und anschliessend in der Kühleinrichtung 9 wieder abgekühlt. In der Erwärmungseinrichtung 10 wird der Faser/Kunststoffverbund noch einmal zwecks Abbau von Spannungen bzw. Schonung der Messer des Granulators erwärmt, bevor der Verbund granuliert wird und als Granulat für die weitere Verarbeitung zur Verfügung gestellt wird. Wie bereits erwähnt eignet sich das Verfahren insbesondere zur Herstellung von Granulaten, die unter dem Markennamen Neonit® und Kinel® erhältlich sind.

## Patentansprüche

1. Verfahren zur Herstellung von faserverstärkten Formmassen, bei welchem Verfahren die Fasern (5) mit einem Kunststoff beschichtet und anschliessend zu der entsprechenden Formmasse geformt werden, dadurch gekennzeichnet, dass die Fasern (5) durch ein Wirbelbett (3) aus Kunststoffgranulat bzw. Kunststoffpulver bewegt werden, wodurch Kunststoffgranulat bzw. Kunststoffpulver in trockenem Zustand auf die Fasern (5) aufgebracht wird, dass anschliessend die Fasern (5) mitsamt dem aufgebrachten Kunststoffgranulat bzw. Kunststoffpulver erwärmt werden, so dass der Kunststoff verflüssigt oder pasteus wird, und dass anschliessend die Fasern (5) mitsamt dem Kunststoff wieder abgekühlt werden und daraus die Formmasse erstellt wird.

2. Verfahren nach Anspruch 1, dadurch gekennzeichnet, dass nach der Verflüssigung des Kunststoffs weiteres Kunststoffgranulat bzw. Kunststoffpulver aufgebracht wird, und dass anschliessend die Fasern mitsamt dem aufgebrachten Kunststoff konditioniert und danach wieder abgekühlt werden und daraus die Formmasse erstellt wird.

3. Verfahren nach einem der Ansprüche 1 oder 2, dadurch gekennzeichnet, dass nach dem Abkühlen die Fasern mitsamt dem aufgebrachten Kunststoff erneut erwärmt werden.

4. Verfahren nach einem der Ansprüche 1 bis 3, dadurch gekennzeichnet, dass als Kunststoffgranulat bzw. Kunststoffpulver ein Reaktivharzgemisch, insbesondere ein Polyimid- oder Epoxidharzgemisch, oder ein thermoplastisches Polymer verwendet wird.

5. Verfahren nach einem der Ansprüche 1 bis 4, dadurch gekennzeichnet, dass nach am Ende die beschichteten, gegebenenfalls konditionierten, und wieder abgekühlten Fasern granuliert werden.
